# DEMANDE DE BREVET EUROPEEN

(11) **EP 0 893 931 A1**
(43) Date de publication de la demande: **27.01.1999**
(21) Numéro de dépôt: 98401702.0
(22) Date de dépôt: 06.07.1998
(51) Int. Cl.: H04Q 7/38, H04B 7/26

(54) **Procédé de détermination d'une information d'avance temporelle dans uns systéme de radiocommunication cellulaire**

(30) Priorité: 07.07.1997 FR 9708605
(71) Demandeur: ALCATEL ALSTHOM COMPAGNIE GENERALE D'ELECTRICITE, 75008 Paris (FR)
(72) Inventeur: Desorbay, Eric, 78520 Dennemont (FR); Roberts, Michael, 92200 Neuilly sur Seine (FR)
(74) Mandataire: El Manouni, Josiane

(57) **Abrégé**

L'invention concerne un procédé de détermination d'une information d'avance temporelle dans un système de radiocommunication cellulaire, du type comprenant les étapes suivantes : une station mobile interrompt (1) sa communication, sur un canal courant, avec une première station de base pour envoyer (2) à une seconde station de base, sur un premier canal cible, une séquence de signaux de synchronisation permettant à ladite seconde station de base de calculer (4) une information d'avance temporelle associée à ladite station mobile vis-à-vis de ladite seconde station de base ; la station mobile reprend (3) sa communication, sur ledit canal courant, avec la première station de base immédiatement après avoir envoyé à la seconde station de base ladite séquence de signaux de synchronisation ; ladite information d'avance temporelle calculée par ladite seconde station de base est transmise (5, 6), via au moins un contrôleur, à ladite station mobile.

Selon l'invention, ledit premier canal cible est un canal d'accès commun à une pluralité de stations mobiles.

## Description

Le domaine de l'invention est celui des systèmes de radiocommunication numériques cellulaires avec des mobiles, et notamment, mais non exclusivement, ceux conçus selon le standard de radiotélécommunication public GSM.

Par standard GSM, on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne un procédé de détermination d'une information d'avance temporelle dans un système de radiocommunication cellulaire, ainsi qu'un procédé de transfert intercellulaire et un procédé de localisation utilisant nécessitant une telle information d'avance temporelle.

La description qui va suivre reprend les termes couramment utilisés dans la terminologie GSM. Pour plus d'informations, on peut se référer à la revue "Digital Cellular Mobile Communication Seminar" du séminaire tenu à ce sujet du 16 au 18 octobre 1990 à Nice.

D'une façon générale, un système de radiocommunication numérique cellulaire est mis en oeuvre au sein d'un réseau de cellules géographiques parcouru par des stations mobiles. Une station de base est associée à chaque cellule et utilise en général plusieurs porteuses. Une station mobile communique par l'intermédiaire de sa station de base courante, c'est-à-dire de la station de base associée à la cellule dans laquelle elle se trouve.

De façon classique, chaque porteuse est segmentée de manière temporelle en utilisant un schéma fixe de multiplexage à répartition dans le temps (AMRT). Selon ce schéma, l'axe temporel est divisé en trames successives de durée fixe. Chacune des trames est elle-même divisée en un nombre déterminé d'intervalles de temps. La récurrence d'un intervalle de temps particulier dans chaque trame constitue un canal physique sur lequel peuvent être multiplexés plusieurs canaux logiques.

Un des problèmes du GSM est la synchronisation des intervalles de temps affectés à une station mobile par rapport à l'horloge maître de sa station de base courante. En effet, afin d'éviter qu'une station mobile émette des données pendant un intervalle de temps affecté à une autre station mobile, il est nécessaire de tenir compte du temps de propagation des ondes radio entre cette station mobile et sa station de base courante, celles-ci ayant chacune une horloge bit qui leur est propre.

Lorsqu'une station mobile souhaite se connecter à une station de base, elle lui envoie un signal d'accès ("Access Burst"). A la réception de ce signal, la station de base calcule l'information d'avance temporelle (ou TA, pour "Timing Advance" en langue anglaise) associée à cette station mobile, et lui envoie un message lui indiquant qu'elle doit émettre ses signaux avec une avance de TA par rapport à son signal d'horloge, de façon à éviter tout recouvrement avec des signaux émis par d'autres stations mobiles. Par la suite, l'information d'avance temporelle TA est mise à jour fréquemment, afin de tenir compte d'un éventuel déplacement de la station mobile par rapport à la station de base.

En outre, il convient de gérer le transfert intercellulaire (ou "handover" en langue anglaise), c'est-à-dire le passage d'une station mobile d'une cellule à une autre. Ceci revient à modifier l'information d'avance temporelle TA, pour que la station mobile se syncronise sur la station de base de la nouvelle cellule.

On connaît plusieurs types de handover, dont les caractéristiques sont maintenant brièvement rappelées.

Le handover synchrone suppose que les horloges des différentes stations de base sont synchrones. Ainsi, lorsqu'une station mobile passe d'une cellule à une autre, il n'est pas nécessaire de lui fournir une nouvelle information d'avance temporelle puisque celle-ci est immédiatement déduite de celle utilisée précédemment. Cette solution, du fait qu'elle nécessite de synchroniser toutes les stations de base, est très coûteuse.

Le handover pseudo-synchrone permet de synchroniser une station mobile sur l'horloge de la station de base de la nouvelle cellule en prenant en compte le décalage temporel existant entre les stations de base de l'ancienne et de la nouvelle cellule. Cette solution est complexe à mettre en oeuvre et nécessite une phase d'apprentissage pour le sous-système radio (BSS).

Le handover asynchrone "classique" est tel que, lorsque la station mobile passe d'une première à une seconde cellules (associées respectivement à une première et une seconde stations de base) : un canal (cible) de la seconde station de base est alloué à la station mobile ; la station mobile envoie à la seconde station de base, sur le canal cible, une séquence de signaux de synchronisation (HANDOVER ACCESS) ; la seconde station de base, à la réception de la séquence de signaux de synchronisation, calcule l'information d'avance temporelle et l'envoie, dans un message (PHYSICAL INFO), à la station mobile ; la station mobile se synchronise et communique avec la seconde station de base en prenant acte de la nouvelle information d'avance temporelle ; enfin, lorsque la procédure est terminée, la première station de base libère le canal préalablement alloué à la station mobile.

Le handover asynchrone "classique" est la solution la plus fréquemment rencontrée et la plus simple à mettre en oeuvre. Cependant, elle présente l'inconvénient majeur d'induire une coupure de la communication trop longue pour être masquée par un logiciel d'extrapolation de parole. En effet, la mesure de l'information d'avance temporelle par la seconde station de base présente une durée relativement longue (environ 40 à 80 ms), pendant laquelle la station mobile ne peut continuer à émettre des données.

Le handover asynchrone "amélioré" vise précisément à réduire le temps pendant lequel la communication est coupée lors d'un handover. Pour plus de détails, on pourra se reporter au brevet français FR 92 10996, concernant un "procédé de transmission d'une information d'avance temporelle à un mobile évoluant dans des cellules d'un réseau GSM à BTS asynchrones", inséré dans la présente descripiton par référence.

Le handover asynchrone "amélioré" se distingue du handover asynchrone "classique" essentiellement en ce que la station mobile reprend sa communication, sur le canal d'origine, avec la première station de base immédiatement après avoir envoyé à la seconde station de base la séquence de signaux de synchronisation. Ensuite, et seulement lorsqu'elle a reçu la nouvelle information d'avance temporelle envoyée par la seconde station de base, elle se synchronise et communique, sur le canal cible, avec la seconde station de base. Ainsi, la coupure de la communication entre la station mobile et la première station de base est limitée à la durée d'émission de la séquence de signaux de synchronisation, et peut donc être masquée par un logiciel d'extrapolation de parole. Par ailleurs, le transfert de communication de la première à la seconde station de base est très rapide et peut également être masqué.

Cependant, le handover asynchrone "amélioré", tel que mis en oeuvre actuellement, ne présente pas une utilisation optimale des ressources.

En effet, le canal cible de la seconde station de base est aujourd'hui alloué à la station mobile dès le début de la procédure de handover. Il s'agit donc généralement d'un canal de trafic (ou canal TCH, pour "Traffic CHannel" en langue anglaise), c'est-à-dire d'une ressource utile. Or, jusqu'à son utilisation par la station mobile pour se synchroniser et communiquer avec la seconde station de base, cette ressource utile est monopolisée uniquement pour la transmission de la séquence de signaux de synchronisation.

En outre, il arrive que la procédure de handover ne soit pas menée à son terme, le canal cible étant alors libéré sans avoir reçu la communication avec la station mobile. Actuellement, dans un tel cas, la ressource utile que constitue le canal cible est donc monopolisée inutilement.

On connaît également des procédés de localisation basés sur la connaissance de plusieurs (au moins deux, et en général trois) informations d'avance temporelle concernant une même station mobile vis-à-vis de plusieurs stations de base. En effet, connaissant la vitesse de propagation d'une onde radio (300 m/µs), chaque information d'avance temporelle fournit une indication de distance par rapport à une station de base donnée. Par combinaison de plusieurs de ces indications de distance (en général par triangulation), il est possible d'obtenir une information de localisation de la station mobile.

Classiquement, chacune des informations d'avance temporelle est obtenue de la façon suivante : un canal (cible) de la station de base concernée est alloué à la station mobile ; la station mobile envoie à la station de base concernée, sur le canal cible, une séquence de signaux de synchronisation ; enfin, la station de base concernée, à la réception de la séquence de signaux de synchronisation, calcule l'information d'avance temporelle et l'envoie, dans un message, à la station mobile.

Tels que mis en oeuvre actuellement, ces procédés de localisation ne présentent pas une utilisation optimale des ressources. En effet, pour le calcul de chacune chacune des informations d'avance temporelle, le canal cible de la station de base concernée est aujourd'hui un canal de trafic (ou canal TCH) ou un canal de contrôle dédié autonome (ou canal SDCCH, pour "Stand-alone Dedicated Control CHannel" en langue anglaise), c'est-à-dire une ressource utile. En d'autres termes, la localisation est supportée moyennant un coût radio, en termes de ressources utiles, relativement élevé .

L'invention a notamment pour objectif de pallier ces différents inconvénients de l'état de la technique.

Plus précisément, l'un des objectifs de la présente invention est de fournir un procédé de détermination d'une information d'avance temporelle dans un système de radiocommunication cellulaire, ce procédé permettant d'optimiser l'utilisation des ressources utiles (et notamment celle des canaux TCH et SDCCH).

Cet objectif, ainsi que d'autres qui apparaîtront par la suite, sont atteints selon l'invention à l'aide d'un procédé de détermination d'une information d'avance temporelle dans un système de radiocommunication cellulaire, du type comprenant les étapes suivantes :
- une station mobile interrompt sa communication, sur un canal courant, avec une première station de base pour envoyer à une seconde station de base, sur un premier canal cible, une séquence de signaux de synchronisation permettant à ladite seconde station de base de calculer une information d'avance temporelle associée à ladite station mobile vis-à-vis de ladite seconde station de base,
- la station mobile reprend sa communication, sur ledit canal courant, avec la première station de base immédiatement après avoir envoyé à la seconde station de base ladite séquence de signaux de synchronisation,
- ladite information d'avance temporelle calculée par ladite seconde station de base est transmise, via au moins un contrôleur, à ladite station mobile,
caractérisé en ce que ledit premier canal cible est un canal d'accès commun à une pluralité de stations mobiles.

Le principe général de l'invention consiste donc à prévoir, dans la seconde station de base, un canal d'accès commun à toutes les stations mobiles dont l'information d'avance temporelle doit être calculée. En d'autres termes, chaque station mobile ne se voit pas affecter son propre canal cible mais partage un canal cible avec d'autres stations mobiles.

Ainsi, on réduit fortement la ressource radio nécessaire à la détermination par la seconde station de base des informations d'avance temporelle de différentes stations mobiles.

Préférentiellement, ledit premier canal cible utilise une voie montante dont la voie descendante associée est par ailleurs utilisée par un autre canal.

En d'autres termes, on utilise un canal jusqu'ici inutilisé. De cette façon, la détermination de l'information temporelle de la station mobile vis-à-vis de la seconde station de base ne monopolise aucune ressource utile (et notamment ni canal TCH ni canal SDCCH).

Avantageusement, ledit autre canal est un canal de diffusion.

De façon avantageuse, ledit premier canal cible s'insère au sein d'une structure multitrame de la même façon que la voie montante d'un canal de contrôle dédié autonome.

Avantageusement, chaque station mobile accédant audit premier canal cible se voit affecter une référence d'accès distincte.

De cette façon, la seconde station de base sait ce que chaque station mobile lui envoie sur le premier canal cible.

Préférentiellement, l'accès audit premier canal cible est géré selon une méthode d'accès prédéterminée.

Ainsi, on évite les collisions sur le premier canal cible entre des signaux provenant de différentes stations mobiles.

De façon préférentielle, ladite méthode d'accès prédéterminée est une méthode d'accès séquentiel du type "instant de départ".

Cette méthode est actuellement utilisée en GSM, notamment pour la redéfinition de fréquence, où elle permet d'indiquer à une station mobile à partir de quel instant elle doit utiliser un nouveau jeu de fréquences.

L'invention concerne également un procédé de transfert intercellulaire de type asynchrone dans un système de radiocommunication cellulaire, caractérisé en ce qu'il comprend les étapes du procédé de détermination d'une information d'avance temporelle tel que précité,
et en ce qu'il comprend en outre une étape lors de laquelle ladite station mobile, en tenant compte de l'information d'avance temporelle ainsi calculée et transmise par ladite seconde station de base, se synchronise et communique avec ladite seconde station de base sur un second canal cible distinct dudit premier canal cible.

Ainsi, le procédé de handover de l'invention constitue encore une amélioration du handover asynchrone "amélioré" de l'art antérieur, déjà discuté ci-dessus. En effet, il s'en distingue en ce que, pour chaque station mobile, deux canaux cibles (et non pas un seul canal cible) de la seconde station de base sont successivement utilisés, à savoir d'une part un premier canal cible, commun à la pluralité de stations mobiles et utilisé uniquement pour la détermination de l'information d'avance temporelle, et d'autre part un second canal cible, propre à la station mobile et utilisé par celle-ci uniquement après que la seconde station de base lui a envoyé l'information d'avance temporelle.

En termes de ressource utile, et notamment de TCH, le procédé de handover de l'invention permet donc d'économiser la ressource utile que constitue le second canal cible, en remplaçant ce dernier par le premier canal cible (qui lui n'est pas une ressource utile) pendant toute la première partie de la procédure de handover correspondant à la détermination de l'information d'avance temporelle.

L'invention concerne aussi un procédé de localisation d'une station mobile dans un système de radiocommunication cellulaire, caractérisé en ce qu'il comprend, réitérées au moins une fois, les étapes du procédé de détermination d'une information d'avance temporelle tel que précité, de façon à obtenir, outre l'information d'avance temporelle associée à ladite station mobile vis-à-vis de la première station de base, au moins une information d'avance temporelle associée à ladite station mobile vis-à-vis d'au moins une seconde station de base,
et en ce qu'il comprend en outre une étape de calcul d'une information de localisation de ladite station mobile à partir d'une part des informations d'avance temporelle et d'autre part notamment d'informations de localisation de chacune des première et seconde(s) station(s) de base concernées par ces informations d'avance temporelle.

Ainsi, le procédé de localisation de l'invention peut être mis en oeuvre sans coût en ressource utile, puisque le premier canal cible ne constitue pas une ressource utile.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon partielle la structure d'un réseau de radiocommunication de type GSM ;
- la figure 2 présente un organigramme du procédé selon l'invention de détermination d'une information d'avance temporelle ;
- la figure 3 présente un organigramme du procédé selon l'invention de transfert intercellulaire ; et
- la figure 4 présente un organigramme d'un mode de réalisation particulier du procédé selon l'invention de localisation.

Dans la suite de la description, on considère le cas d'un système de radiocommunication de type GSM. Il est clair cependant que l'invention s'applique à tout type de système de radiocommunication numérique cellulaire.

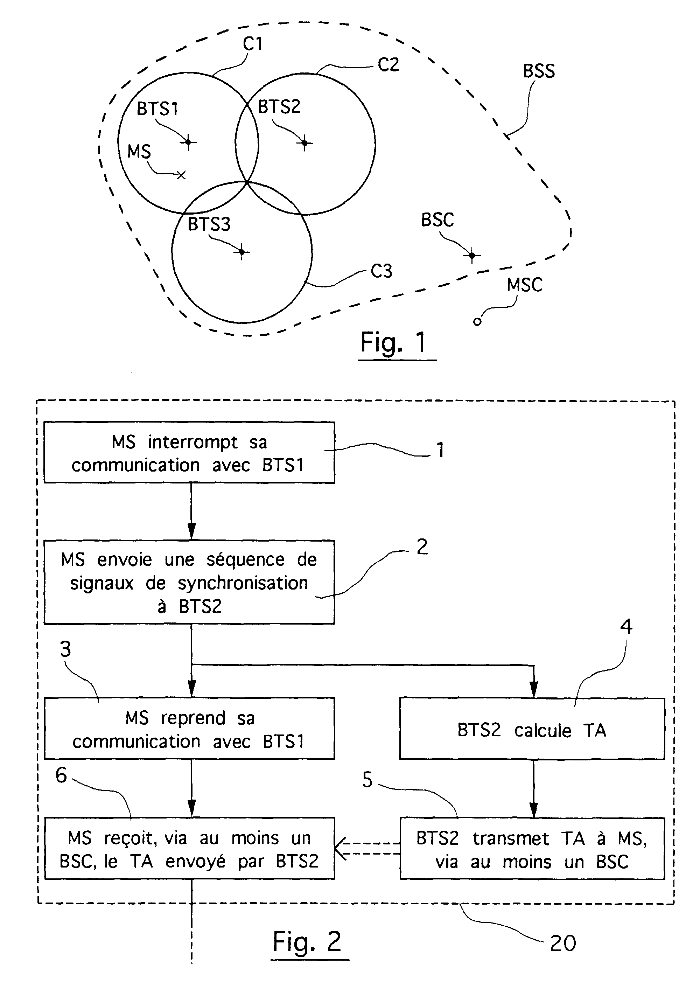

On rappelle tout d'abord, en relation avec la figure 1, la structure d'un réseau GSM. Une station mobile MS évolue dans une cellule C1 correspondant à la couverture géographique d'une station de base BTS1. D'autres cellules C2, C3 sont chacune associées à une autre station de base BTS2, BTS3. Les stations de bases BTS1 à BTS3 sont gérées par un contrôleur de stations de base BSC. L'association d'un contrôleur de stations de base BSC et d'un certain nombre de stations de bases constitue un système de stations de base BSS. Plusieurs systèmes de stations de base BSS peuvent être pilotés par un centre de commutation MSC, qui est la structure maître d'un réseau GSM.

On présente maintenant, en relation avec l'organigramme de la figure 2, le procédé selon l'invention de détermination d'une information d'avance temporelle. Dans l'exemple utilisé à titre explicatif, on considère que la station mobile MS est dans la cellule C1 (elle communique avec la station de base BTS1) et on cherche à déterminer son information d'avance temporelle (ou TA, pour "Timing Advance") vis-à-vis de la station de base BTS2 de la cellule C2.

A l'étape 1, la station mobile MS interrompt sa communication, sur un canal courant, avec la station de base BTS1. A l'étape 2, la station mobile MS envoie à la station de base BTS2, sur un premier canal cible, une séquence de signaux de synchronisation (de type HAND OVER ACCESS). A l'étape 3, immédiatement après avoir envoyé à la station de base BTS2 la séquence de signaux de synchronisation, la station mobile MS reprend sa communication, sur le canal courant, avec la station de base BTS1. A l'étape 4, effectuée simultanément à l'étape 3, la station de base BTS2 calcule l'information d'avance temporelle TA associée à la station mobile MS vis-à-vis de la station de base BTS2. A l'étape 5, la station de base BTS2 transmet à la station mobile MS, via au moins un contrôleur BSC, l'information d'avance temporelle TA calculée. A l'étape 6, symétrique de l'étape 5, la station mobile MS reçoit, via au moins un contrôleur BSC, l'information d'avance temporelle TA calculée et transmise par la station de base BTS2. L'ensemble de ces étapes est référencé 20.

Selon une caractéristique essentielle de l'invention, le premier canal cible est un canal d'accès commun, c'est-à-dire pouvant être utilisé par toutes les stations mobiles dont l'information d'avance temporelle TA doit être calculée par la station de base BTS2.

Ce premier canal cible utilise par exemple une voie montante dont la voie descendante associée est par ailleurs utilisée par un canal de diffusion (ou canal CBCH, pour "Cell Broadcast CHannel" en langue anglaise). Il s'insère par exemple au sein d'une structure multitrame de la même façon que la voie montante d'un canal de contrôle dédié autonome (ou canal SDCCH, pour "Stand-alone Dedicated Control CHannel" en langue anglaise).

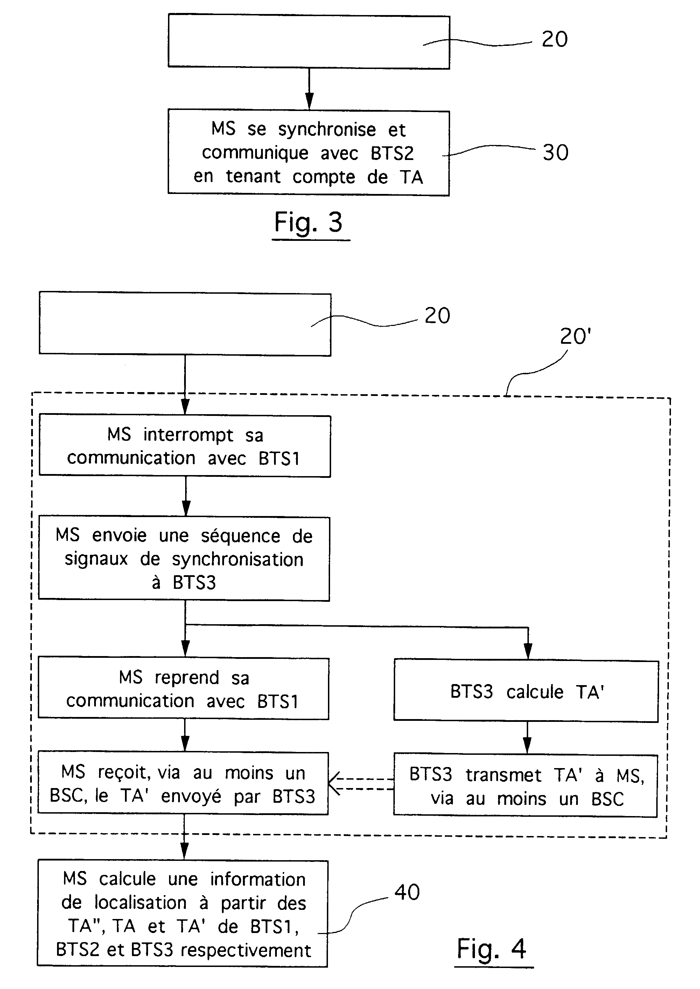

On peut en outre prévoir l'affectation d'une référence d'accès distincte (de type "Handover Reference") à chaque station mobile MS accédant au premier canal cible. Ainsi, dans l'application au handover (expliquée plus en détail par la suite, en relation avec la figure 3), chaque référence d'accès affectée à une station mobile permet de faire le lien entre d'une part les messages (tels que "HANDOVER COMMAND") envoyés par le système, et notamment la station de base BTS2, vers la station mobile, et d'autre part les messages (tels que "HANDOVER ACCESS") envoyés par la station mobile vers la station de base BTS2, sur le premier canal cible.

Optionnellement, l'accès au premier canal cible peut être géré selon une méthode d'accès prédéterminée, telle que par exemple la méthode d'accès séquentiel du type "instant de départ". Utilisée ici, cette méthode, plus connue sous le nom "starting time" en langue anglaise, consiste à indiquer à chaque station mobile MS le numéro de la trame à partir de laquelle elle peut émettre sur le premier canal cible, sans risque de collision avec les émissions des autres stations mobiles.

Comme présenté sur l'organigramme de la figure 3, le procédé selon l'invention de transfert intercellulaire, qui est du type asynchrone, comprend :
- l'ensemble 20 des étapes 1 à 6 du procédé de détermination d'une information d'avance temporelle décrit ci-dessus en relation avec la figure 2 ; et
- une étape 30 lors de laquelle la station mobile MS, en tenant compte de l'information d'avance temporelle TA calculée et transmise par la station de base BTS2, se synchronise et communique avec cette station de base BTS2, sur un second canal cible.

Il est important de noter que le second canal cible, par exemple un canal TCH, est propre à la station mobile et parfaitement distinct du premier canal cible (qui lui est commun à toutes les stations mobiles).

Comme présenté sur l'organigramme de la figure 4, dans un mode de réalisation particulier, le procédé selon l'invention de localisation comprend :
- l'ensemble 20 des étapes 1 à 6 du procédé de détermination d'une information d'avance temporelle décrit ci-dessus en relation avec la figure 2 ;
- une réitération 20', mais appliquée à la station de base BTS3, de l'ensemble 20 des étapes 1 à 6 du procédé de détermination d'une information d'avance temporelle décrit ci-dessus en relation avec la figure 2. Ainsi, outre l'information d'avance temporelle TA vis-à-vis de BTS2, on obtient une autre information d'avance temporelle TA' vis-à-vis de BTS3 ; et
- une étape 40 de calcul d'une information de localisation de la station mobile MS à partir des informations d'avance temporelle calculées et d'informations de localisation de chacune des stations de base concernées.

Dans l'exemple présenté, le calcul de l'étape 40 est effectué selon une méthode quelconque de triangulation (bien connue de l'homme du métier), puisque l'on dispose de trois informations d'avance temporelle, à savoir TA et TA', vis-à-vis de BTS2 et BTS3 respectivement, ainsi que TA", vis-à-vis de BTS1. En effet, la station mobile connaît l'information d'avance temporelle vis-à-vis de BTS1 puisque cette dernière est la station de base de la cellule courante.

Il est clair que d'autre types de calcul peuvent être envisagés sans sortir du cadre de l'invention. En d'autres termes, plus de trois informations d'avance temporelle peuvent être utilisées, ou même uniquement deux. Dans ce dernier cas, il convient de prévoir en outre des moyens de décision prenant en compte d'autres informations (telles que des mesures du déplacement de la station mobile à l'aide de capteurs, ou des informations cartographiques).

On a présenté ci-dessus deux applications du procédé selon l'invention de détermination d'une information d'avance temporelle, à savoir le handover (cf fig.3) et la localisation (cf fig.4). Il est clair que d'autres applications peuvent être envisagées, sans sortir du cadre de l'invention.

## Revendications

1. Procédé de détermination d'une information d'avance temporelle dans un système de radiocommunication cellulaire, du type comprenant les étapes suivantes (20) :
- une station mobile (MS) interrompt (1) sa communication, sur un canal courant, avec une première station de base (BTS1) pour envoyer (2) à une seconde station de base (BTS2), sur un premier canal cible, une séquence de signaux de synchronisation permettant à ladite seconde station de base (BTS2) de calculer (4) une information d'avance temporelle (TA) associée à ladite station mobile (MS) vis-à-vis de ladite seconde station de base (BTS2),
- la station mobile (MS) reprend (3) sa communication, sur ledit canal courant, avec la première station de base (BTS1) immédiatement après avoir envoyé à la seconde station de base (BTS2) ladite séquence de signaux de synchronisation,
- ladite information d'avance temporelle (TA) calculée par ladite seconde station de base (BTS2) est transmise (5, 6), via au moins un contrôleur (BSC), à ladite station mobile (MS),
caractérisé en ce que ledit premier canal cible est un canal d'accès commun à une pluralité de stations mobiles.

2. Procédé selon la revendication 1, caractérisé en ce que ledit premier canal cible utilise une voie montante dont la voie descendante associée est par ailleurs utilisée par un autre canal.

3. Procédé selon la revendication 2, caractérisé en ce que ledit autre canal est un canal de diffusion.

4. Procédé selon l'une quelconque des revendications 1 à 3, caractérisé en ce que ledit premier canal cible s'insère au sein d'une structure multitrame de la même façon que la voie montante d'un canal de contrôle dédié autonome.

5. Procédé selon l'une quelconque des revendications 1 à 4, caractérisé en ce que chaque station mobile accédant audit premier canal cible se voit affecter une référence d'accès distincte.

6. Procédé selon l'une quelconque des revendications 1 à 5, caractérisé en ce que l'accès audit premier canal cible est géré selon une méthode d'accès prédéterminée.

7. Procédé selon la revendication 6, caractérisé en ce que ladite méthode d'accès prédéterminée est une méthode d'accès séquentiel du type "instant de départ".

8. Procédé de transfert intercellulaire de type asynchrone dans un système de radiocommunication cellulaire, caractérisé en ce qu'il comprend les étapes (20) du procédé de détermination d'une information d'avance temporelle selon l'une quelconque des revendications 1 à 7,
et en ce qu'il comprend en outre une étape (30) lors de laquelle ladite station mobile, en tenant compte de l'information d'avance temporelle ainsi calculée et transmise par ladite seconde station de base, se synchronise et communique avec ladite seconde station de base (BTS2) sur un second canal cible distinct dudit premier canal cible.

9. Procédé de localisation d'une station mobile dans un système de radiocommunication cellulaire, caractérisé en ce qu'il comprend, réitérées au moins une fois (20, 20'), les étapes du procédé de détermination d'une information d'avance temporelle selon l'une quelconque des revendications 1 à 7, de façon à obtenir, outre l'information d'avance temporelle (TA") associée à ladite station mobile (MS) vis-à-vis de la première station de base, au moins une information d'avance temporelle (TA, TA') associée à ladite station mobile (MS) vis-à-vis d'au moins une seconde station de base (BTS2, BTS3),
et en ce qu'il comprend en outre une étape (40) de calcul d'une information de localisation de ladite station mobile (MS) à partir d'une part des informations d'avance temporelle (TA", TA, TA') et d'autre part notamment d'informations de localisation de chacune des première (BTS1) et seconde(s) (BTS2, BTS3) station(s) de base concernées par ces informations d'avance temporelle (TA", TA, TA').
